# FASCICULE DE BREVET EUROPEEN

(11) **EP 2 333 262 B1**
(45) Date de publication et mention de la délivrance du brevet: **01.05.2013**
(21) Numéro de dépôt: 10290585.8
(22) Date de dépôt: 28.10.2010
(51) Int. Cl.: F01N 3/20, C01C 1/08

(54) **Procédé de traitement de polluants contenus dans des gaz d'échappement, notamment d'un moteur à combustion interne, et installation utilisant un tel procédé**
Verfahren zur Aufbereitung der Schadstoffe, die in den Abgasen insbesondere eines Verbrennungsmotors enthalten sind, und Anlage, die ein solches Verfahren nutzt
Method for processing pollutants contained in exhaust gases, in particular of an internal combustion engine, and facility using such a method

(30) Priorité: 11.12.2009 FR 0906015
(43) Date de publication de la demande: 15.06.2011
(73) Titulaire: IFP Energies nouvelles, 92852 Rueil-Malmaison Cedex (FR)
(72) Inventeur: Millet, Claire-Noëlle, 69540 Irigny (FR); Colliou, Thierry, 38138 Les Cotes d'Arey (FR); Martin, Brigitte, 69230 St Genis Laval (FR)

(56) Documents cités:
- EP-A1- 1 479 652
- WO-A1-98/42623
- WO-A1-2007/049042

## Description

La présente invention se rapporte à un procédé de traitement en dépollution des gaz d'échappement, notamment de moteur à combustion interne pour véhicule automobile.

Elle vise plus particulièrement un procédé de traitement de polluants contenus dans les gaz d'échappement d'un moteur à combustion interne à autoallumage, notamment de type Diesel, mais n'écarte en aucune manière un tel procédé pour les moteurs à allumage commandé, tels que ceux fonctionnant avec un carburant gazeux ou avec de l'essence, et en particulier en mélange pauvre.

Elle concerne également une installation de traitement en dépollution des gaz d'échappement utilisant ce procédé.

Comme cela est connu, les gaz d'échappement de ces moteurs contiennent de nombreux polluants, tels que des hydrocarbures imbrûlés, du monoxyde de carbone, des oxydes d'azote (NO et NO2) plus communément baptisés sous le terme de NOx, pour les moteurs fonctionnant à l'essence ou au gaz, et en sus des particules pour les moteurs de type Diesel.

Afin de respecter les normes d'émissions de polluants et de préserver l'environnement, il est nécessaire de traiter ces polluants avant de rejeter les gaz d'échappement dans l'atmosphère.

Comme cela est généralement connu, ceci est réalisé grâce à une installation de traitement des gaz d'échappement circulant dans la ligne d'échappement du moteur.

Ainsi, des moyens de catalyse, plus connus en tant que catalyseur d'oxydation, permettent d'oxyder les hydrocarbures imbrûlés et le monoxyde de carbone pour des moteurs fonctionnant en mélange pauvre.

Pour une ligne d'échappement d'un moteur Diesel, un filtre à particules peut être placé sur cette ligne de manière à retenir les particules présentes dans les gaz d'échappement et éviter ainsi qu'elles soient rejetées dans l'atmosphère.

Ce filtre, qui peut être également un filtre catalysé, doit être régénéré périodiquement afin qu'il conserve toutes ses capacités de filtration. Les opérations de régénération consistent principalement en une augmentation de la température du filtre, généralement en augmentant la richesse des gaz d'échappement qui le traversent. La température plus élevée qui est obtenue permet de réaliser une combustion des particules retenues dans ce filtre.

En outre et cela pour pouvoir traiter les NOx, les gaz d'échappement traversent également d'autres moyens de catalyse, notamment des catalyseurs du type catalyseur RCS (pour Réduction Catalytique Sélective). Ce catalyseur RCS permet de réduire sélectivement les NOx en azote grâce à l'action d'un agent réducteur.

Cet agent, qui est généralement injecté en amont du catalyseur RCS, peut être de l'ammoniac ou un composé générant de l'ammoniac par décomposition, comme de l'urée, ou être un hydrocarbure provenant d'une substance hydrocarbonée, voir par exemple le document WO 98/42623.

Cet agent réducteur se mélange aux gaz d'échappement, puis réagit avec les NOx des gaz d'échappement sur le catalyseur RCS selon plusieurs réactions chimiques possibles, comme par exemple 4*NH*₃ + 2*NO* + 2*NO*₂ → 4*N*₂ + 6*H*₂*O* ou *4NH₃* + *4NO* + *O₂* → *4N₂* + *6H₂O*

Il se trouve que le précurseur de l'agent réducteur classiquement utilisé pour cette application doit être stocké dans un volume important, alors que l'espace disponible dans le véhicule est limité. La nécessité d'un volume important est dû au fait que ce précurseur est stocké sous forme liquide et dilué dans de l'eau.

Par ailleurs, les catalyseurs RCS, qui utilisent l'ammoniac comme agent réducteur des NOx, ne sont généralement actifs qu'au delà d'une température d'amorçage qui varie entre 180 et 250 °C suivant la nature du catalyseur. En dessous de cette température, et en particulier au moment du démarrage à froid du véhicule, les NOx ne sont pas traités par les catalyseurs RCS à l'ammoniac.

La présente invention permet de remédier aux inconvénients ci-dessus en utilisant un composé présentant une densité importante ou stocké sous une forme solide. Ceci permet de disposer de ce composé sous un volume restreint dans le véhicule.

A cet effet, la présente invention concerne avec une installation comprenant une ligne d'échappement avec des moyens de catalyse à réduction catalytique sélective traversés par lesdits gaz et des moyens d'injection d'un agent réducteur dans ladite ligne pour traiter lesdits polluants lors du passage au travers desdits moyens de catalyse, caractérisé en ce qu'il consiste :
- à placer des moyens de catalyse additionnels sur la ligne d'échappement,
- à chauffer un composé organo-nitré pour obtenir sa décomposition en un mélange d'au moins un agent réducteur en phase gazeuse contenant de l'ammoniac et un autre agent réducteur en phase gazeuse ainsi que de la vapeur d'eau,
- à comprimer puis à refroidir ce mélange pour condenser la vapeur d'eau en une phase liquide d'eau et obtenir une phase gazeuse d'un des deux agents réducteurs et une phase liquide de l'autre agent réducteur,
- à injecter l'un des agents réducteurs dans la ligne d'échappement en association avec au moins lesdits moyens de catalyse à réduction catalytique sélective pour traiter les polluants de ces gaz,
- à injecter l'autre des agents réducteurs en association avec lesdits moyens de catalyse additionnels pour traiter les polluants des gaz d'échappement

Le procédé peut consister à injecter l'eau en phase liquide dans la ligne d'échappement.

Le procédé peut consister à utiliser l'eau en phase liquide pour réaliser une solution aqueuse de composé.

Le procédé peut consister à évacuer l'eau en phase liquide vers l'extérieur.

Le procédé peut consister à refroidir, par des premiers moyens de refroidissement, le mélange pour obtenir une phase gazeuse de deux agents réducteurs et une phase liquide d'eau, puis à refroidir, par des deuxièmes moyens de refroidissement, la phase gazeuse de deux agents réducteurs pour obtenir un agent réducteur en phase gazeuse et un autre agent réducteur en phase liquide.

Le procédé peut consister à chauffer le composé organo-nitré pour obtenir sa décomposition en un mélange d'au moins un agent réducteur contenant de l'ammoniac et un autre agent réducteur contenant une substance hydrocarbonée.

L'invention concerne également une installation de traitement de polluants contenus dans des gaz d'échappement d'un moteur à combustion interne comprenant une ligne d'échappement avec des moyens de catalyse à réduction catalytique sélective traversés par lesdits gaz et des moyens d'injection d'un agent réducteur dans ladite ligne pour traiter lesdits polluants lors du passage au travers desdits moyens de catalyse, caractérisée en ce qu'elle comprend un dispositif de production d'agent réducteur avec des moyens de chauffage d'un composé organo-nitré pour obtenir un mélange d'au moins deux agents réducteurs en phase gazeuse, dont l'un contient de l'ammoniac, et de la vapeur d'eau, et des moyens de catalyse additionnels auxquels sont associés des moyens d'injection d'un des agents réducteurs.

L'autre des deux agents réducteurs en phase gazeuse peut comporter une substance hydrocarbonée.

L'installation peut comprendre des moyens de refroidissement du mélange des deux agents réducteurs en phase gazeuse et de la vapeur d'eau permettant de réaliser une phase liquide d'eau et une phase liquide d'au moins un des agents réducteurs.

Le composé organo-nitré peut comprendre un composé pouvant se décomposer en de l'ammoniac et au moins en une substance hydrocarbonée.

Le composé organo-nitré peut avantageusement comprendre de l'hexaméthylènetètramine.

Le composé organo-nitré peut comprendre un sel d'ammonium avec un acétate d'ammonium.

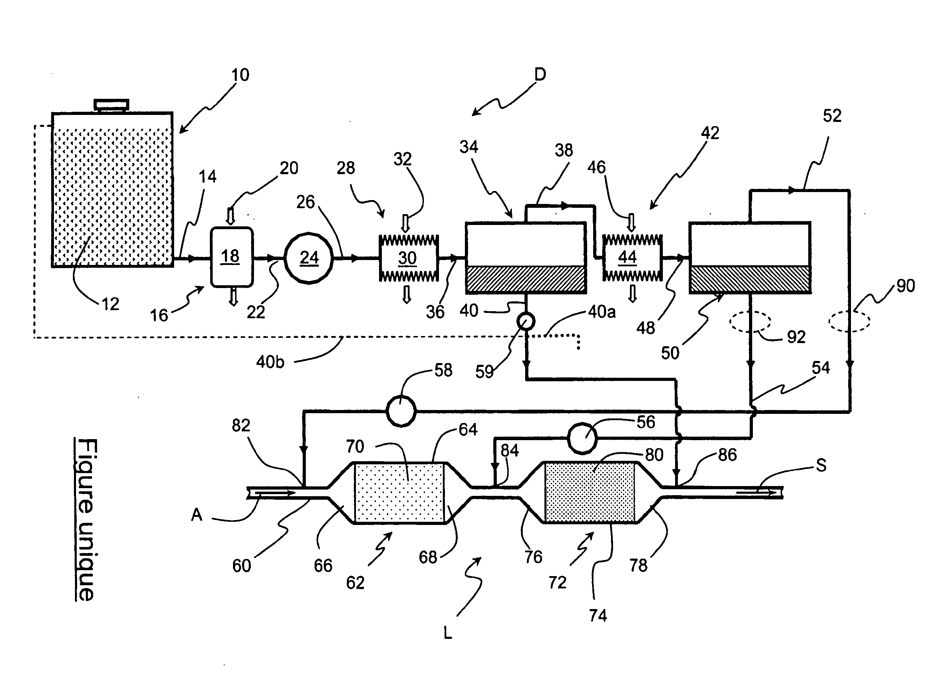

Les autres caractéristiques et avantages de l'invention vont apparaître maintenant à la lecture de la description qui va suivre, donnée à titre uniquement illustratif et non limitatif, et à laquelle est annexée la figure unique qui montre l'installation selon l'invention.

Cette installation de traitement en dépollution de gaz d'échappement comprend un dispositif D de production d'au moins deux agents réducteurs et une ligne d'échappement L à laquelle il est associé.

Le dispositif comprend un réservoir de stockage 10 contenant un composé de base 12, de préférence en solution aqueuse, ayant la particularité de se décomposer en ammoniac et en une substance hydrocarbonée, plus particulièrement en un hydrocarbure, soit par hydrolyse, soit sous l'effet de la chaleur.

A titre d'exemple, ce composé de base peut être un composé organo-nitré. La séparation des composants (tel que l'ammoniac et l'hydrocarbure) obtenus par hydrolyse ou thermolyse peut se réaliser par une série de condensations.

Ce composé peut être de l'hexaméthylènetètramine - en abrégé HMT - (plus connu sous la dénomination d'urotropine) ou un sel d'ammonium, tel que de l'acétate d'ammonium. Ces composés ont l'avantage de pouvoir être stockés sous forme solide. Ceci permet de réduire significativement l'encombrement du réservoir et/ou d'augmenter la quantité transportée de composé.

Ce réservoir est relié par une conduite 14 à des moyens de chauffage 16 du composé de base provenant de ce réservoir.

Avantageusement, ces moyens de chauffage sont constitués par un échangeur de chaleur 18 parcouru, d'une part, par ce composé et, d'autre part, par une source de chaleur 20, ici les gaz d'échappement 20 du moteur, qui transmet la chaleur qu'elle contient à ce composé.

D'autres types de source de chaleur ou de moyens de chauffage habituellement connus peuvent être envisagés, tels que le liquide de refroidissement du moteur du véhicule, le lubrifiant de ce moteur, des brûleurs, des résistances électriques chauffantes,...

Cet échangeur est relié par une autre conduite 22 à un compresseur 24 du composé chauffé. Ce compresseur est lui-même relié par une conduite 26 à des premiers moyens de refroidissement 28 du composé comprimé chaud.

Ces premiers moyens de refroidissement comportent, à titre d'exemple, un refroidisseur 30 sous forme d'un échangeur traversé par le composé comprimé chaud provenant de la conduite 26 et parcouru par un fluide de refroidissement, comme de l'air frais extérieur 32.

Une cuve fermée 34, formant des premiers moyens de stockage et de séparation du composé refroidi, est reliée à ce refroidisseur par une conduite 36. Cette cuve comporte deux conduites de sortie 38, 40. Une conduite de sortie 38 pour un fluide sous forme gazeuse, dite conduite de sortie gazeuse, débute en partie haute de cette cuve et une autre conduite de sortie 40 d'un fluide à l'état liquide, baptisée conduite de sortie liquide aqueux, prend naissance dans le fond de cette cuve.

La conduite de sortie gazeuse 38 aboutit à des deuxièmes moyens de refroidissement 42 qui avantageusement sont semblables aux premiers moyens avec un autre refroidisseur 44 balayé par un fluide de refroidissement 46, ici également de l'air extérieur.

Ce refroidisseur est relié à son tour par une conduite 48 à un réceptacle fermé 50, formant des deuxièmes moyens de stockage et de séparation, qui comporte également deux conduites de sortie, une conduite de sortie de fluide gazeux 52 située en partie haute du réceptacle et une conduite de sortie de fluide liquide 54 placée en partie basse de ce réceptacle.

Préférentiellement, les deux conduites de sorties 52 et 54 de ce réceptacle sont pourvues chacune de moyens de contrôle de circulation de fluide, ici une pompe doseuse liquide 56 placée sur la conduite 52 et une pompe doseuse gazeuse 58 placée sur la conduite 54.

De même, la conduite de sortie liquide aqueux 40 de la cuve 34 comporte un moyens de contrôle de circulation de fluide qui peut être sous la forme d'un robinet, d'une vanne, d'une pompe doseuse,...

Dans l'exemple illustré sur la figure, le dispositif D fait partie d'une installation de traitement en dépollution des gaz d'échappement circulant dans une ligne d'échappement L entre une entrée de gaz (Flèche A) provenant de la combustion d'un mélange carburé d'un moteur à combustion interne vers une sortie d'échappement (Flèche S) dans l'atmosphère.

Cette ligne d'échappement comprend un tube d'échappement 60 sur lequel est logé un catalyseur RCS 62 utilisant l'ammoniac comme agent réducteur.

Ce catalyseur RCS comprend une enveloppe tubulaire 64 avec une boîte d'entrée 66 des gaz d'échappement provenant du moteur et une boîte de sortie de gaz traités 68 reliée au tube d'échappement pour l'évacuation des gaz d'échappement dépollués dans l'atmosphère (Flèche S).

L'enveloppe 64 contient un support filtrant 70 placé entre les boîtes d'entrée et de sortie. Ce corps, de préférence monolithique, comprend un support dans lequel un ou plusieurs réactifs catalytiques sont implantés pour agir sur les NOx de ces gaz d'échappement.

Préférentiellement, un catalyseur additionnel RCS 72 est placé sur ce tube 60 entre le catalyseur RCS 62 et la sortie (Flèche S) des gaz d'échappement. Ce catalyseur additionnel comprend, de manière préférentielle, une enveloppe tubulaire 74, une boîte d'entrée 76 reliée par une portion du tube d'échappement 60 à la boîte de sortie 68 du premier catalyseur RCS 62 et une boîte de sortie 78 reliée à ce tube d'échappement pour l'évacuation des gaz d'échappement dépollués dans l'atmosphère (Flèche S).

L'enveloppe 74 contient également un support filtrant 80, de préférence monolithique, qui est actif chimiquement pour agir sur les NOx des gaz d'échappement provenant du catalyseur RCS 62.

Avantageusement, ce catalyseur additionnel a la particularité d'agir sur les NOx en utilisant une substance hydrocarbonée comme agent réducteur.

Alternativement, ce catalyseur additionnel RCS peut être remplacé par un filtre à particules ou un filtre à particules catalysé qui comporte un support filtrant imprégné avec un ou plusieurs réactifs catalytiques pour agir sur les NOx et/ou sur l'exotherme de ce filtre. Dans cette alternative, la substance hydrocarbonée est utilisée pour réduire les NOx stockés dans le filtre à particules catalysé et/ou pour générer l'exotherme nécessaire à la combustion des particules présentes au sein de ce filtre.

Dans la suite de la description et uniquement à titre d'exemple, il est considéré une ligne échappement L avec, entre l'entrée des gaz d'échappement (Flèche A) et la sortie de ces gaz (Flèche S) et dans cet ordre, un catalyseur RCS 62, dit catalyseur principal, et un catalyseur additionnel RCS 72.

Comme illustré sur la figure unique, la conduite de sortie de fluide gazeux 52 du réceptacle 50 aboutit à un point d'injection 82 de l'agent réducteur ammoniaqué dans la portion du tube d'échappement 60 située en amont de la boîte d'entrée 66 du catalyseur principal 62 en formant ainsi des moyens d'injection de l'agent réducteur ammoniaqué. Pour former des moyens d'introduction de l'agent réducteur à base d'hydrocarbure dans la ligne d'échappement, la conduite de sortie de fluide liquide 54 arrive sur un piquage 84 du tube d'échappement 60. Ce piquage est placé entre la boîte de sortie 68 du catalyseur principal et la boîte d'entrée 76 du catalyseur additionnel. La conduite de sortie liquide aqueux 40 parvient à une prise de liaison 86 placée en aval du catalyseur additionnel entre sa boîte de sortie 78 et la sortie des gaz d'échappement (Flèche S) de manière à constituer des moyens d'admission de ce liquide dans cette ligne.

Sans sortir du cadre de l'invention, il peut être prévu que les conduites précitées aboutissent dans les boîtes qu'elles concernent. Ainsi, la conduite de sortie de fluide liquide 52 peut aboutir dans la boîte d'entrée 66 du catalyseur principal 62, la conduite de sortie de fluide gazeux 54 peut arriver dans la boîte d'entrée 76 du catalyseur additionnel 72 et la conduite de sortie liquide aqueux 40 peut parvenir dans la boîte de sortie 78 de ce catalyseur additionnel.

Il peut aussi être prévu que le débouché de la conduite de sortie liquide aqueux 40 soit libre, comme illustré en pointillés (référencé 40a) sur la figure, de façon à évacuer le liquide concerné vers l'extérieur, ou soit relié au réservoir 10 (référence 40b) pour se mélanger avec le composé qu'il contient.

La description va maintenant se poursuivre sur la base d'un exemple selon lequel le composé 12 contenu dans le réservoir 10 est une solution aqueuse d'hexaméthylènetètramine - en abrégé HMT - (C₆H₁₂N₄ + H₂O).

L'HMT est initialement en phase solide, préférentiellement sous forme de pastilles de petite taille (une dizaine de mm), ce qui la rend facile à stocker. Cette HMT peut donc être mélangée avec de l'eau pour obtenir la solution aqueuse qui est ensuite introduite dans le réservoir 10.

Une alternative consiste à ne dissoudre les pastilles dans de l'eau qu'au fur et à mesure des besoins, ce qui a pour avantage de diminuer les volumes de stockage.

L'eau nécessaire à cette dissolution peut provenir du dispositif lui-même, comme cela sera explicité plus loin.

Cette solution est, dans un premier temps, chauffée à une température minimum voisine de 260 °C, et préférentiellement à une température inférieure à la température de craquage ou de réactions de substances hydrocarbonées par traversée de l'échangeur 18 en subissant une hydrolyse.

Le mélange obtenu contient des phases gazeuses d'ammoniac (NH₃) et de formaldéhyde (H₂CO) associées à de la vapeur d'eau. Ce mélange obtenu est ensuite dirigé vers le compresseur 24 par la conduite 22 pour y être comprimé. De manière préférentielle, cette compression est comprise entre 4 et 10 bars.

Le mélange comprimé est par la suite refroidi par passage dans le refroidisseur 30 à une température d'environ 150°C à environ 180°C selon la pression du mélange. Ce refroidissement a pour effet de condenser la vapeur d'eau et d'introduire dans la cuve 34, au travers de la conduite 36, un mélange de deux phases avec une phase gazeuse comprenant un mélange d'ammoniac et de formaldéhyde (NH₃ + H₂CO) et une phase liquide avec de l'eau (H₂O).

Dans la cuve 34, les deux phases se séparent et l'eau contenue dans le fond de cette cuve est évacuée par la conduite de sortie liquide aqueux 40. Cette eau est ensuite dirigée soit dans le tube d'échappement au travers de la prise de liaison 86, soit vers l'extérieur par la conduite de sortie liquide libre 40a, soit introduite par la conduite 40b dans le réservoir 10 pour dissoudre au moins une partie des pastilles d'HMT qui y sont contenues de façon à obtenir une solution aqueuse souhaité. Le moyen de contrôle de circulation de fluide 59 permet d'interrompre la circulation de l'eau dans la conduite lorsque le niveau est insuffisant dans la cuve 34 et/ou de contrôler la quantité d'eau envoyée dans le réservoir 10 pour obtenir la quantité souhaitée de solution aqueuse d'HMT.

Bien entendu, dans ce dernier cas et même si l'on récupère l'eau de la décomposition, il est prévu de placer au préalable un volume suffisant d'eau dans la cuve 34 pour dissoudre la HMT contenue dans le réservoir.

Il peut être également prévu que le moyen de contrôle de circulation de fluide 59 soit conformé d'une façon telle qu'il permette de diriger l'eau vers le tube d'échappement au travers de la prise de liaison 86 et/ou vers l'extérieur par la conduite de sortie liquide libre 40a et/ou introduite dans le réservoir 10 par la conduite 40b.

Le mélange gazeux contenu dans le haut de cette cuve est évacué par la conduite de sortie gazeuse 38 vers le second refroidisseur 44 qu'il traverse pour être refroidi jusqu'aux environs de la température ambiante.

Ce refroidissement permet de condenser la phase vapeur d'hydrocarbure en une phase liquide.

A la sortie de ce refroidisseur, la conduite 48 transporte, vers le réceptacle 50, un mélange de deux phases, une phase liquide d'hydrocarbure (formaldéhyde H₂CO) résultant du refroidissement au travers du refroidisseur 44 et une phase gazeuse d'ammoniac (NH₃). Ces deux phases sont séparées, dans ce réceptacle, en une phase liquide d'hydrocarbure dans son fond et en une phase gazeuse d'ammoniac dans la partie haute de celui-ci.

L'ammoniac gazeux est injecté par la conduite de sortie de fluide gazeux 52 dans la ligne d'échappement au point 82 en amont du catalyseur 62, lorsque la pompe doseuse liquide 58 est actionnée, notamment sous l'impulsion de moyens de contrôle comme le calculateur du véhicule.

Par cela, cet ammoniac se mélange avec les gaz d'échappement chauds. Le mélange ainsi formé réagit avec les NOx des gaz d'échappement lors de la traversée du catalyseur principal RCS en assurant ainsi le traitement en dépollution des NOx.

De même, lorsque la pompe doseuse gazeuse 56 est opérationnelle, l'hydrocarbure liquide est amené par la conduite de fluide liquide 54 dans la ligne d'échappement en amont du catalyseur additionnel 72 par le piquage 84.

L'hydrocarbure injecté dans le tube 60 se vaporise au contact des gaz d'échappement provenant du catalyseur principal RCS. Cet hydrocarbure vaporisé se mélange aux gaz d'échappement en réagissant avec les NOx qui n'ont pas été réduits lors de la traversée du catalyseur additionnel RCS. Ceci permet de finaliser ainsi le traitement en dépollution des NOx.

Eventuellement, la phase gazeuse d'ammoniac et/ou la phase liquide d'hydrocarbure peuvent être stockées dans des accumulateurs, respectivement un accumulateur gazeux 90 et un accumulateur liquide 92 pour un usage ultérieur lorsque l'une et/ou l'autre des pompes doseuses n'est pas active en relation avec les conditions de fonctionnement du moteur.

Il peut être envisagé de substituer au catalyseur additionnel RCS 72 un filtre à particules catalysé oxydant qui réagisse également à l'agent réducteur d'hydrocarbure provenant de la conduite de sortie liquide 54.

Dans ce cas, l'hydrocarbure est oxydé par le catalyseur. Cette réaction génère un exotherme qui est utilisé pour déclencher la combustion des particules piégées dans le filtre.

Il est à noter que les deux catalyseurs peuvent être utilisés selon une stratégie, généralement pour le démarrage à froid du moteur, selon laquelle seul le catalyseur additionnel RCS 72 est utilisé avec l'hydrocarbure provenant de la conduite de sortie 54 lorsque la température des gaz d'échappement est insuffisante pour rendre opérationnel le catalyseur principal RCS 62. Dès que la température de ces gaz est suffisante (de l'ordre de 200°C), le catalyseur principal RCS 62 est actif en réagissant avec l'ammoniac amené par la conduite de sortie 52 et le catalyseur additionnel RCS 72 peut être rendu inopérationnel en désactivant la pompe doseuse gazeuse 56.

Bien entendu, le compresseur 24, les pompes doseuses 56 et 58 ainsi que le moyen de contrôle 59 sont contrôlés par tous moyens, tels que le calculateur du moteur, de façon à pouvoir être actionnés selon les différentes stratégies de dépollution que contiennent les tables de ce calculateur.

La présente invention n'est pas limitée à l'exemple décrit mais englobe toutes variantes et tous équivalents couverts par la présente invention.

Notamment, il peut être envisagé que l'on utilise un autre type de composé dans le réservoir 10 qui a pour résultat d'obtenir dans le réceptacle 50 l'ammoniac sous forme de liquide et un autre agent réducteur sous forme gazeuse.

Dans ce cas, la conduite de sortie liquide 54 aboutit au point d'injection 82 et la conduite de sortie gazeuse 52 arrive au piquage 84.

## Revendications

1. Procédé de traitement de polluants contenus dans des gaz d'échappement, notamment d'un moteur à combustion interne, avec une installation comprenant une ligne d'échappement (L) avec des moyens de catalyse à réduction catalytique sélective (62) traversés par lesdits gaz et des moyens d'injection (82) d'un agent réducteur dans ladite ligne pour traiter lesdits polluants lors du passage au travers desdits moyens de catalyse, **caractérisé en ce qu'**il consiste :
- à placer des moyens de catalyse additionnels (72) sur la ligne d'échappement,
- à chauffer un composé organo-nitré pour obtenir sa décomposition en un mélange d'au moins un agent réducteur en phase gazeuse contenant de l'ammoniac et un autre agent réducteur en phase gazeuse ainsi que de la vapeur d'eau,
- à comprimer puis à refroidir ce mélange pour condenser la vapeur d'eau en une phase liquide d'eau et obtenir une phase gazeuse d'un des deux agents réducteurs et une phase liquide de l'autre agent réducteur,
- à injecter l'un des agents réducteurs dans la ligne d'échappement en association avec au moins lesdits moyens de catalyse à réduction catalytique sélective (62) pour traiter les polluants de ces gaz,
- à injecter l'autre des agents réducteurs en association avec lesdits moyens de catalyse additionnels pour traiter les polluants des gaz d'échappement.

2. Procédé de traitement de polluants selon la revendication 1 **caractérisé en ce qu'**il consiste à injecter l'eau en phase liquide dans la ligne d'échappement.

3. Procédé de traitement de polluants selon l'une des revendications précédentes, **caractérisé en ce qu'**il consiste à utiliser l'eau en phase liquide pour réaliser une solution aqueuse de composé.

4. Procédé de traitement de polluants selon l'une des revendications précédentes, **caractérisé en ce qu'**il consiste à évacuer l'eau en phase liquide vers l'extérieur.

5. Procédé de traitement de polluants selon la revendication 1, **caractérisé en ce qu'**il consiste à refroidir, par des premiers moyens de refroidissement (28), le mélange pour obtenir une phase gazeuse de deux agents réducteurs et une phase liquide d'eau, puis à refroidir, par des deuxièmes moyens de refroidissement (42), la phase gazeuse de deux agents réducteurs pour obtenir un agent réducteur en phase gazeuse et un autre agent réducteur en phase liquide.

6. Procédé de traitement de polluants selon la revendication 1, **caractérisé en ce qu'**il consiste à chauffer le composé organo-nitré pour obtenir sa décomposition en un mélange d'au moins un agent réducteur contenant de l'ammoniac et un autre agent réducteur contenant une substance hydrocarbonée.

7. Installation de traitement de polluants contenus dans des gaz d'échappement d'un moteur à combustion interne comprenant une ligne d'échappement (L) avec des moyens de catalyse à réduction catalytique sélective (62) traversés par lesdits gaz et des moyens d'injection (82) d'un agent réducteur dans ladite ligne pour traiter lesdits polluants lors du passage au travers desdits moyens de catalyse, **caractérisée en ce qu'**elle comprend un dispositif de production (D) d'agent réducteur avec des moyens de chauffage (16) d'un composé organo-nitré pour obtenir un mélange d'au moins deux agents réducteurs en phase gazeuse, dont l'un contient de l'ammoniac, et de la vapeur d'eau, et des moyens de catalyse additionnels (72) auxquels sont associés des moyens d'injection (84) d'un des agents réducteurs.

8. Installation de traitement de polluants selon la revendication 7, **caractérisée en ce que** l'autre des deux agents réducteurs en phase gazeuse comporte une substance hydrocarbonée.

9. Installation de traitement de polluants selon l'une des revendications précédentes, **caractérisée en ce que** le dispositif comprend des moyens de refroidissement (28, 42) du mélange des deux agents réducteurs en phase gazeuse et de la vapeur d'eau permettant de réaliser une phase liquide d'eau et une phase liquide d'au moins un des agents réducteurs.

10. Installation de traitement de polluants selon la revendication 7, **caractérisé en ce que** le composé organo-nitré comprend un composé pouvant se décomposer en de l'ammoniac et au moins en une substance hydrocarbonée.

11. Installation de traitement de polluants selon la revendication 7, **caractérisé en ce que** le composé organo-nitré comprend de l'hexaméthylènetètramine (C₆H₁₂N₄).

12. Installation de traitement de polluants selon la revendication 7, **caractérisé en ce que** le composé organo-nitré comprend un sel d'ammonium.

13. Installation de traitement de polluants selon la revendication 12, **caractérisé en ce que** le sel d'ammonium comprend un acétate d'ammonium.

## Claims

1. A method of treating pollutants contained in exhaust gases, notably of an internal-combustion engine, with a system comprising an exhaust line (L) with selective catalytic reduction catalysis means (62) traversed by said gases and injection means (82) for injecting a reducing agent into said line so as to treat said pollutants as they flow through said catalysis means, **characterized in that** it consists in:
- placing additional catalysis means (72) on the exhaust line,
- heating an organonitrogen compound so as to decompose it into a mixture of at least an ammonia-containing reducing agent in the gas phase, another reducing agent in the gas phase and water vapour,
- compressing, then cooling this mixture so as to condense the water vapour to a liquid water phase and to obtain a gas phase of one of the two reducing agents and a liquid phase of the other reducing agent,
- injecting one of the reducing agents into the exhaust line in combination with at least said selective catalytic reduction catalysis means (62) in order to treat the pollutants of these gases,
- injecting the other reducing agent in combination with said additional catalysis means so as to treat the pollutants of the exhaust gases.

2. A pollutant treatment method as claimed in claim 1, **characterized in that** it consists in injecting the water in the liquid phase into the exhaust line.

3. A pollutant treatment method as claimed in any one of the previous claims, **characterized in that** it consists in using the water in the liquid phase to prepare an aqueous compound solution.

4. A pollutant treatment method as claimed in any one of the previous claims, **characterized in that** it consists in discharging the water in the liquid phase to the outside.

5. A pollutant treatment method as claimed in claim 1, **characterized in that** it consists in cooling, by first cooling means (28), the mixture so as to obtain a gas phase of two reducing agents and a liquid water phase, then in cooling, by second cooling means (42), the gas phase of two reducing agents so as to obtain a reducing agent in the gas phase and another reducing agent in the liquid phase.

6. A pollutant treatment method as claimed in claim 1, **characterized in that** it consists in heating the organonitrogen compound so as to obtain its decomposition into a mixture of at least a reducing agent containing ammonia and another reducing agent containing a hydrocarbon substance.

7. A system for treating pollutants contained in the exhaust gases of an internal-combustion engine, comprising an exhaust line (L) with selective catalytic reduction catalysis means (62) traversed by said gases and injection means (82) for injecting a reducing agent into said line so as to treat said pollutants upon passage thereof through said catalysis means, **characterized in that** it comprises a reducing agent production device (D) with means (16) for heating an organonitrogen compound so as to obtain a mixture of at least two reducing agents in the gas phase, one containing ammonia and water vapour, and additional catalysis means (72) associated with injection means (84) for injecting one of the reducing agents.

8. A pollutant treatment system as claimed in claim 7, **characterized in that** the other one of the two reducing agents in the gas phase comprises a hydrocarbon substance.

9. A pollutant treatment system as claimed in any one of the previous claims, **characterized in that** the device comprises means (28, 42) for cooling the mixture of the two reducing agents in the gas phase and the water vapour, allowing to obtain a liquid water phase and a liquid phase of at least one of the reducing agents.

10. A pollutant treatment system as claimed in claim 7, **characterized in that** the organonitrogen compound comprises a compound that can decompose into ammonia and at least a hydrocarbon substance.

11. A pollutant treatment system as claimed in claim 7, **characterized in that** the organonitrogen compound comprises hexamethylene tetramine (C₆H₁₂N₄).

12. A pollutant treatment system as claimed in claim 7, **characterized in that** the organonitrogen compound comprises an ammonium salt.

13. A pollutant treatment system as claimed in claim 12, **characterized in that** the ammonium salt comprises an ammonium acetate.

## Patentansprüche

1. Verfahren zur Behandlung von Schadstoffen, die in Abgasen enthalten sind, insbesondere von einem Verbrennungsmotor, mit einer Vorrichtung, die eine Abgasleitung (L) mit Katalysemitteln zur selektiven katalytischen Reduktion (62) umfasst, die von den Gasen durchströmt wird sowie Injektionsinstrumente (82) zur Injektion eines Reduktionsmittels in die Leitung zur Behandlung der Schadstoffe während des Durchfließens der Katalysemittel, **dadurch gekennzeichnet, dass** es umfasst:
- das Anordnen von zusätzlichen Katalysemitteln (72) an der Abgasleitung,
- das Erhitzen einer Organo-Nitroverbindung, um deren Zerfall in ein Gemisch von wenigstens einem Reduktionsmittel in der Gasphase, das Ammoniak enthält und einem weiteren Reduktionsmittel in der Gasphase sowie Wasserdampf zu erhalten,
- das Komprimieren und darauffolgende Abkühlen des Gemischs zur Kondensation des Wasserdampfs in eine flüssige Wasserphase und um eine Gasphase eines der beiden Reduktionsmittel und eine flüssige Phase des anderen Reduktionsmittels zu erhalten,
- die Injektion des einen Reduktionsmifteis in die Abgasleitung in Kombination mit wenigstens den Katalysemitteln zur selektiven katalytischen Reduktion (62) zur Behandlung der Schadstoffe dieser Gase,
- die Injektion des anderen Reduktionsmittels in Kombination mit den zusätzlichen Katalysemitteln zur Behandlung der Schadstoffe der Abgase.

2. Verfahren zur Behandlung von Schadstoffen nach Anspruch 1, **dadurch gekennzeichnet, dass** es die Injektion von Wasser in flüssiger Phase in die Abgasleitung umfasst.

3. Verfahren zur Behandlung von Abgasen nach einem der vorherigen Ansprüche, **dadurch gekennzeichnet, dass** es die Verwendung von Wasser in flüssiger Phase zum Erhalt einer wässrigen Lösung von Verbindungen umfasst.

4. Verfahren zur Behandlung von Schadstoffen nach einem der vorherigen Ansprüche, **dadurch gekennzeichnet, dass** es das Ableiten von Wasser in flüssiger Phase nach außen umfasst.

5. Verfahren zur Behandlung von Schadstoffen nach Anspruch 1, **dadurch gekennzeichnet, dass** es das Abkühlen des gemisch mittels erster Kühlinstrumente (28) umfasst, um eine Gasphase zweier Reduktionsmittel und eine flüssige Wasserphase zu erhalten und anschließen das Abkühlen der Gasphase der beiden Reduktionsmittel mittels zweiter Kühlinstrumente (42), um ein Reduktionsmittel in der Gasphase und ein weiteres Reduktionsmittel in flüssiger Phase zu erhalten.

6. Verfahren zur Behandlung von Schadstoffen nach Anspruch 1, **dadurch gekennzeichnet, dass** es das Erhitzen der Organo-Nitroverbindung umfasst, um deren Zerfall in ein Gemisch von wenigstens einem Reduktionsmittel, das ammoniak enthält und einem weiteren Reduktionsmittel, das Kohlenwasserstoffsubstanz enthält, zu erhalten.

7. Vorrichtung zur Behandlung von Schadstoffen , die in Abgasen eines Verbrennungsmotors enthalten sind, der eine Abgasleitung (L) mit Katalysemitteln zur selektiven katalyschen Reduktion (62) umfasst, die von den Gasendurchströmt wird sowie Injektionsinstrumente (82) zur Injektion eines Reduktionsmittels in die Leitung zur Behandlung der Schadstoffe während des Durchfließens der Katalysemittel, **dadurch gekennzeichnet, dass** sie ein Herstellungssystem (D) eines Reduktionsmitteln in dr Gemisch von wenigstens zwei Reduktionsmitteln in der Gasphase, von denen eines Ammoniak enthält sowie Wasserdampf zu erhalten und zusätliche Katalysemittel (72), mit denen die Injektionsinstrumente (84) eines der Reduktionsmittel verbunden sind.

8. Vorrichtung zur Behandlung von Schadstoffen nach 7, **dadurch gekennzeichnet, dass** das andere der beiden Reduktionsmitteln in der Gasphase eine Kohlenwassestoffsubstanz umfasst.

9. Vorrichtung zur Behandlung von Schadstoffen nach einem der vorherigen Ansprüche, **dadurch gekennzeichnet, dass** das System Kühlinstrumente (28, 42) zum Kühlen der beiden Reduktionsmittel in der Gasphase und des Wasserdampfs umfasst, was den Erhalt einer flüssigen Wasserphase und einer flüssigen Phase wenigstens eines der Reduktionsmittel erlaubt.

10. Vorrichtung zur Behandlung von Schadstoffen nach Anspruch 7, **dadurch gekennzeichnet, dass** die Organo-Nitroverbindung eine Verbindung umfasst, die zu Ammoniak und wenigstens einer Kohlenwasserstoffsubstanz zerfallen kann.

11. Vorrichtung zur Behandlung von Schadstoffen nach Anspruch 7, **dadurch gekennzeichnet, dass** die Organo-Nitroverbindung Hexamethylentetramin (C₆H₁₂N₄) umfasst.

12. Vorrichtung zur Behandlung von Schadstoffen nach Anspruch 7, **dadurch gekennzeichnet, dass** die Organo-Nitroverbindung ein Ammoniumsalz umfasst.

13. Vorrichtung zur Behandlung von Schadstoffen nach Anspruch 12, **dadurch gekennzeichnet, dass** das Ammoniumsalz ein Ammoniumacetat umfasst.
